# EUROPEAN PATENT APPLICATION

(11) **EP 4 249 247 A1**
(43) Date of publication of application: **27.09.2023**
(21) Application number: 23162064.2
(22) Date of filing: 15.03.2023
(51) Int. Cl.: B32B 27/32, D06N 3/04, C09D 175/00, C08G 75/23

(54) **AQUEOUS PAINT FOR LEATHER COATING AND CORRESPONDING LEATHER MATERIAL**

(30) Priority: 23.03.2022 CN 202210291267
(71) Applicant: Benecke-Kaliko AG, 30419 Hannover (DE)
(72) Inventor: QIU, Xiaohan, 30165 Hannover (DE); PENG, Shuping, 30165 Hannover (DE); XU, Yuanfeng, 30165 Hannover (DE)
(74) Representative: Continental Corporation

(57) **Abstract**

The present invention relates to an aqueous paint for a leather coating. The aqueous paint comprises an aqueous polyethersulfone-modified polyurethane, wherein the aqueous polyethersulfone-modified polyurethane is an aqueous polyurethane dispersion chemically modified by a polyethersulfone. The present invention further relates to a leather material which comprises a leather layer and an aqueous coating coated on a surface of the leather layer, wherein the aqueous coating is prepared from the aqueous paint according to the present invention. The leather material obtained thereby can well meet the performance requirements for car interiors and has improved aging resistance and coating adhesion.

## Description

### Technical Field

The present invention relates to an aqueous paint for a leather coating and further relates to a leather material coated with the aqueous paint. The leather material is especially suitable for car interior products.

### Background Art

Various artificial leathers such as polyvinyl chloride (PVC) artificial leathers, thermoplastic polyolefin elastomer (TPO) artificial leathers, polyurethane (PU) artificial leathers, polyolefin foam materials, etc. are used in car interior products. In order to improve surface properties of artificial leathers, such as aging resistance, abrasion resistance, stain resistance, molding processability, etc., a surface coating is generally coated onto a surface of the artificial leather.

The surface coating may be composed of a variety of coatings, including a solvent-based coating and an aqueous coating. The solvent-based coating uses an organic solvent as a dispersion medium and has the defects of unpleasant odor, environmental pollution, energy waste, etc. The aqueous coating uses water as a solvent or a dispersion medium, and has the characteristics of being non-toxic, odorless, not easy to burn, etc. With stricter environmental protection requirements, the solvent-based coating is greatly limited. Therefore, it is imperative to develop a high-performance aqueous coating.

Various aqueous coatings have been developed in the prior art, such as polyurethane aqueous coatings.

When the aqueous coatings are used on a leather material for car interiors, various performance requirements for the car interiors are required to be satisfied. Various aqueous coatings known at present, for example, a common aqueous polyurethane coating, are generally applied to PVC artificial leathers. However, for polyolefin materials, satisfactory coating adhesion cannot be achieved. In addition, properties of the products of the leather material coated with the aqueous coating, such as aging resistance, sticking resistance, and molding processability, are required to be further improved, so as to better satisfy the requirements for the car interiors.

Therefore, there is a need in the present invention to provide a new technical solution to solve at least one of the above technical problems.

### Summary of the Invention

Based on the prior art, the present invention aims to provide an aqueous paint which can be used in a leather coating, and to obtain a leather material coated with the aqueous paint. The leather material can well meet performance requirements for car interiors and has improved aging resistance and coating adhesion of leathers.

In order to realize the above technical purposes, the present invention provides an aqueous paint for a leather coating, wherein the aqueous paint comprises an aqueous polyethersulfone-modified polyurethane, the aqueous polyethersulfone-modified polyurethane is an aqueous polyurethane dispersion chemically modified by a polyethersulfone (PES for short).

A key formula of the aqueous paint of the present invention is the aqueous polyethersulfone-modified polyurethane. The applicant has unexpectedly discovered by means of a large number of experiments and researches that compared with the aqueous paint containing a polyurethane (PU), when coated on a surface of a leather, the aqueous paint containing an aqueous polyethersulfone-modified polyurethane according to the present invention obviously improves the adhesion strength, ensures an adhesive strength between the aqueous paint and the leather material, and especially improves the adhesion strength of the coating on a surface of a polyolefin material as compared to the prior art; and compared with the aqueous paint containing an aqueous polyarylsulfone(PAS for short)-modified polyurethane, the aqueous paint containing an aqueous polyethersulfone-modified polyurethane can enable the coated leather material to have a better fluidity, to be easy to mold and process, and meet the stretch rate requirement for car interior materials.

According to the present invention, the aqueous polyethersulfone-modified polyurethane is an aqueous polyurethane dispersion chemically modified by a polyethersulfone. Compared with an aqueous paint containing a polyethersulfone (PES) and a polyurethane (PU) which are physically mixed, the addition of the aqueous polyurethane dispersion chemically modified by a polyethersulfone may enable the aqueous paint to have an improved aging resistance and storage stability.

The aqueous polyethersulfone-modified polyurethane used according to the present invention may be obtained commercially.

According to the present invention, preferably, the aqueous paint contains 50-97% of the aqueous polyethersulfone-modified polyurethane based on the total weight of the aqueous paint, for example, the content of the aqueous polyethersulfone-modified polyurethane is 50%, 55%, 60%, 65%, 70%, 75%, 80%, 85%, 90%, 95%, 97%, or in a range between any two of these numerical values.

According to the present invention, the aqueous paint contains 1-10% of a crosslinking agent based on the total weight of the aqueous paint, for example, the content of the crosslinking agent is 1%, 2%, 3%, 4%, 5%, 6%, 7%, 8%, 9%, 10% or in a range between any two of these numerical values.

As the crosslinking agent in the aqueous paint, a crosslinking agent conventionally used in aqueous paints may be used. It is preferable to use one or more of a polyisocyanate crosslinking agent, a polycarbodiimide crosslinking agent, and an aziridine or oxazoline crosslinking agent. When the content of the crosslinking agent is too low, the adhesion strength of the coating to the surface of the leather is reduced. When the content is too high, a low-temperature aging resistance is deteriorated. Therefore, the content of the crosslinking agent in the aqueous paint of the present invention is limited to 1-10%.

According to the present invention, the aqueous paint contains 2-20% of an anti-sticking agent based on the total weight of the aqueous paint, for example, the content of the anti-sticking agent is 2%, 3%, 4%, 5%, 6%, 7%, 8%, 9%, 10%, 11%, 12%, 13%, 14%, 15%, 16%, 17%, 18%, 19%, 20% or in a range between any two of these numerical values.

As the anti-sticking agent, a conventional organic anti-sticking agent or inorganic anti-sticking agent, or a combination thereof can be used. As the organic anti-sticking agent, for example, an organosilicon polymer is used, the main component of which is a polysiloxane. As the inorganic anti-sticking agent, for example, one or more of diatomaceous earth, talc, calcium carbonate, synthetic silica, and glass beads is/are used. The anti-sticking agent is conducive to reducing the self-adhesion of the coating, reducing the sticking of a surface, and making the surface coarser, thereby facilitating the production and transportation of the leather material. When the content of the anti-sticking agent is too low, sticking resistance is deteriorated. When the content is too high, the adhesion strength of the coating to the surface of the leather is reduced. Therefore, the content of the anti-sticking agent in the aqueous paint of the present invention is limited to 2-20%.

According to the present invention, the aqueous paint contains 0-20% of a cosolvent based on the total weight of the aqueous paint, for example, the content of the cosolvent is 0%, 1%, 2%, 3%, 4%, 5%, 6%, 7%, 8%, 9%, 10%, 11%, 12%, 13%, 14%, 15%, 16%, 17%, 18%, 19%, 20% or in a range between any two of these numerical values.

As the cosolvent in the aqueous paint, a cosolvent commonly used in aqueous paints, such as an alcohol ether solvent, may be used. Preferably, the cosolvent is one or more of dipropylene glycol methyl ether, dipropylene glycol butyl ether, and isopropanol. The cosolvent can promote the dispersion and dissolution of an aqueous paint system. However, if the content of the cosolvent is too high, the adhesion strength of the coating to the surface of the leather is reduced. Therefore, the content of the cosolvent in the aqueous paint of the present invention is not higher than 20%.

According to the performance requirements, it is also possible to additionally add other auxiliaries, such as a stabilizer, an antioxidant, etc., to the aqueous paint. These auxiliaries may be conventional known materials. It is also possible to add some other conventional aqueous polyurethane dispersions for an aqueous paint to the aqueous paint, so as to, for example, further reduce a production cost while ensuring the adhesion strength of the coating.

In order to realize the above technical purposes, the present invention further provides a leather material which comprises a leather layer and an aqueous coating coated on a surface of the leather layer, wherein the aqueous coating is prepared from the aqueous paint according to the present invention.

The characteristics and advantages of the aqueous paint according to the present invention are also suited to the leather material of the present invention and are not described in detail here in order to avoid repetition.

The aqueous coating is formed by applying the aqueous paint onto the leather material and drying same. The aqueous polyethersulfone-modified polyurethane dispersion in the coating reacts with the crosslinking agent to form a dense surface coating structure.

As a leather layer material therein, any genuine leather or artificial leather material can be used in principle, for example, a polyvinyl chloride (PVC), a polyurethane (PU), or a polyolefin (PO).

Preferably, the leather layer comprises a polyolefin skin layer and the aqueous coating is coated on a surface of the polyolefin skin layer. The polyolefin skin layer is composed of, for example, a thermoplastic polyolefin elastomer (TPO), a polypropylene (PP), a polyethylene (PE), etc. The aqueous coating prepared from the aqueous paint of the present invention achieves a desirably good adhesion on the polyolefin skin layer.

Further preferably, the polyolefin skin layer is a polyolefin dense layer or a polyolefin foamed layer. The dense layer has not been subjected to foaming and a large number of pores are not formed in the layer, and thus the dense layer has a relatively large density. The foamed layer has been subjected to a foaming process by means of adding a foaming agent and a large number of pores are formed in the layer, and thus the foamed layer has a relatively low density. The polyolefin dense layer is composed of, for example, a thermoplastic polyolefin elastomer (TPO), and the polyolefin foamed layer is composed of, for example, a polypropylene (PP) or polyethylene (PE).

In this case, a structure of the leather material is composed of, for example, a surface coating, a TPO dense layer and the aqueous coating in sequence. The surface coating may be prepared from a paint based on an aqueous polyurethane dispersion, and especially forms a top paint, so as to provide a good surface abrasion resistance. Preferably, the surface coating may further comprise a priming paint prepared from the aqueous paint according to the present invention, thereby providing a good coating adhesion strength. Additionally, the TPO dense layer may be, by means of the side coated with the aqueous coating, further bonded to a base cloth layer, for example, by means of a glue.

Alternatively, the polyolefin skin layer comprises a polyolefin dense layer and a polyolefin foamed layer, and the aqueous coating is coated on a surface of the polyolefin foamed layer.

In this case, a structure of the leather material is composed of, for example, a surface coating, a TPO dense layer, the polyolefin foamed layer, and the aqueous coating in sequence. The surface coating may be prepared from a paint based on an aqueous polyurethane dispersion, and especially forms a top paint, so as to provide a good surface abrasion resistance. Preferably, the surface coating may further comprise a priming paint prepared from the aqueous paint according to the present invention, thereby providing a good coating adhesion strength. The TPO dense layer and the polyolefin foamed layer may be hot-pressed and fit together.

Further preferably, the leather layer comprises a PVC skin layer and the aqueous coating is coated on a surface of the PVC skin layer. The PVC skin layer can be further bonded with the polyolefin skin layer, so as to form a composite leather layer. The aqueous coating prepared from the aqueous paint of the present invention maintains a good adhesion on the PVC skin layer.

In this case, a structure of the leather material is composed of, for example, a surface coating, a PVC dense layer, a PVC foamed layer, and the aqueous coating in sequence. The surface coating may be prepared from a paint based on an aqueous polyurethane dispersion, and especially forms a top paint, so as to provide a good surface abrasion resistance. Preferably, the surface coating may further comprise a priming paint prepared from the aqueous paint according to the present invention, thereby providing a good coating adhesion strength. The PVC dense layer and the PVC foamed layer may be bonded together by means of a glue. The glue preferably contains an aqueous polyethersulfone-modified polyurethane, so as to improve the binding force. Additionally, the PVC foamed layer may be, by means of the side coated with the aqueous coating, further bonded to a base cloth layer, for example, by means of a glue.

The leather material according to the present invention may be used in car interior products, such as a car door panel, an instrument panel, an armrest, a headrest, a seat, etc.

The present invention has the following advantages: the aqueous paint based on the aqueous polyethersulfone-modified polyurethane improves the aging resistance, storage stability, and adhesion strength between the coating formed therefrom and the leather layer, and particularly compared with a dissatisfactory adhesion strength of a conventional aqueous coating to a polyolefin material, the aqueous coating prepared from the aqueous paint of the present invention achieves a desirably good adhesion on the polyolefin material; furthermore, the obtained leather material has good flexibility and material fluidity, is easy to mold and process, meets the stretch rate requirement for car interior materials, and avoids the problems of breakage, poor bonding, etc. in a processing process.

### Detailed Description of Embodiments

In order to make a person skilled in the art better understand the technical solutions of the present invention, the technical solutions of the present invention are clearly and completely described below in conjunction with examples and comparative examples. It is obvious that the described examples are some of, rather than all of, the examples of the present invention. On the basis of the examples in the present invention, all the other examples obtained by those of ordinary skill in the art without creative efforts shall fall within the scope of protection of the present invention.

### Example 1:

A leather material of the present invention was prepared according to the following steps:
1) preparation of a TPO dense layer: 30% of a polyethylene, 30% of a polypropylene, 35% of ethylene-butene rubber, 1% of a stearic acid auxiliary agent, and 4% of a color masterbatch were mixed until uniform, the resulting mixture was put into an extruder to be extruded to form a TPO film; and then the TPO film was subjected to a corona treatment to obtain a TPO dense layer;
2) preparation of an aqueous polyurethane paint: 85% of a polycarbon-type aqueous polyurethane dispersion, 9% of a hand feeling agent, 0.5% of a defoaming agent, and 0.5% of a flatting agent were added to a container, and stirred until uniform, then 5% of a curing agent was added, and the materials were continuously stirred until uniform to respectively obtain an aqueous polyurethane priming paint, intermediate paint, and top paint;
3) the TPO skin layer obtained in step 1) was coated with a layer of the aqueous polyurethane priming paint prepared in step 2), then coated with a layer of the aqueous polyurethane intermediate paint prepared in step 2) after the paint surface was cured, and then coated with a layer of the aqueous polyurethane top paint prepared in step 2) after the paint surface was cured, and then drying was performed;
4) preparation of an aqueous polyethersulfone-modified polyurethane paint: 75% of an aqueous polyethersulfone-modified polyurethane (purchased from Stahl Fine Chemistry (Suzhou) Co., Ltd.), 10% of an isopropanol cosolvent, and 10% of a synthetic silica anti-sticking agent were added to a container, and stirred until uniform, then 5% of an isocyanate crosslinking agent was added, and the materials were continuously stirred until uniform to obtain an aqueous polyethersulfone-modified polyurethane paint;
5) a polypropylene PP foamed layer was provided, a layer of the aqueous polyethersulfone-modified polyurethane paint prepared in step 4) was coated onto the PP foamed layer, and then drying was performed; and
6) the TPO dense layer coated with the aqueous polyurethane paint layer obtained in step 3) was embossed at 180°C and fitted with the PP foamed layer coated with the aqueous polyethersulfone-modified polyurethane paint layer obtained in step 5) during the embossing.

The leather material obtained thereby was composed of the aqueous polyurethane surface coating, the TPO dense layer, the PP foamed layer, and the aqueous polyethersulfone-modified polyurethane coating in sequence.

### Example 2

A leather material of the present invention was prepared by the same process steps as in example 1, the formula of the aqueous paint in step 4) was as follows:
92% of an aqueous polyethersulfone-modified polyurethane (purchased from Stahl Fine Chemistry (Suzhou) Co., Ltd.),
5% of a dipropylene glycol methyl ether cosolvent,
2% of an organosilicon anti-sticking agent, and
1% of an aziridine crosslinking agent.

### Example 3

A leather material of the present invention was prepared by the same process steps as in example 1, the formula of the aqueous paint in step 4) was as follows:
65% of an aqueous polyethersulfone-modified polyurethane (purchased from Stahl Fine Chemistry (Suzhou) Co., Ltd.),
15% of a dipropylene glycol butyl ether cosolvent,
15% of a diatomaceous earth anti-sticking agent, and
5% of a polycarbodiimide crosslinking agent.

### Example 4

A leather material of the present invention was prepared by the same process steps as in example 1, the formula of the aqueous paint in step 4) was as follows:
50% of an aqueous polyethersulfone-modified polyurethane (purchased from Stahl Fine Chemistry (Suzhou) Co., Ltd.),
20% of an isopropanol cosolvent,
20% of a calcium carbonate anti-sticking agent, and
10% of an oxazoline crosslinking agent.

### Comparative examples 1-5

A leather material not according to the present invention was prepared by the same process steps as in example 1 according to a formula of an aqueous paint in Table 1.

**Table 1 Formula of an aqueous paint in step 4) of comparative examples 1-5 (unit: %)**

| | Compara tive example 1 | Compara tive example 2 | Compara tive example 3 | Compara tive example 4 | Compara tive example 5 |
|---|---|---|---|---|---|
| Aqueous polyethersulf one-modified polyurethane | 84 | 64 | 79.5 | 69 | 63 |
| Isopropanol cosolvent | 10 | 10 | 10 | 10 | 22 |
| Synthetic silica anti-sticking agent | 1 | 21 | 10 | 10 | 10 |
| Isocyanate crosslinking agent | 5 | 5 | 0.5 | 11 | 5 |

The aqueous polyethersulfone-modified polyurethane is purchased from Stahl Fine Chemistry (Suzhou) Co., Ltd.

### Comparative example 6

A leather material not according to the present invention was prepared by the same process steps as in example 1 according to a formula of an aqueous paint in Table 2. A difference from example 1 was that an aqueous polyarylsulfone-modified polyurethane was used instead of the aqueous polyethersulfone-modified polyurethane.

### Comparative example 7

A leather material not according to the present invention was prepared by the same process steps as in example 1 according to a formula of an aqueous paint in Table 2. A difference from example 1 was that an aqueous acrylic acid-modified polyurethane was used instead of the aqueous polyethersulfone-modified polyurethane.

### Comparative example 8

A leather material not according to the present invention was prepared by the same process steps as in example 1 according to a formula of an aqueous paint in Table 2. A difference from example 1 was that an unmodified aqueous polyurethane was used instead of the aqueous polyethersulfone-modified polyurethane.

### Comparative example 9

A leather material not according to the present invention was prepared by the same process steps as in example 1 according to a formula of an aqueous paint in Table 2. A difference from example 1 was that the physically mixed aqueous polyurethane and polyethersulfone was used instead of the aqueous polyethersulfone-modified polyurethane.

### Comparative example 10

A leather material not according to the present invention was prepared by the same process steps as in example 1 according to a formula of an aqueous paint in Table 2. A difference from example 1 was that an unmodified aqueous polyethersulfone was used instead of the aqueous polyethersulfone-modified polyurethane.

**Table 2 Formula of an aqueous paint in step 4) of comparative examples 6-10 (unit: %)**

| | Compara tive example 6 | Compara tive example 7 | Compara tive example 8 | Compara tive example 9 | Compara tive example 10 |
|---|---|---|---|---|---|
| Aqueous polyarylsulfo ne-modified polyurethan e | 75 | - | - | - | - |
| Aqueous acrylic acid-modified polyurethan e | - | 75 | - | - | - |
| Unmodified aqueous polyurethan e | - | - | 75 | - | - |
| Physically mixed aqueous polyurethan e and polyethersul fone | - | - | - | 75 | - |
| Unmodified aqueous polyethersul fone | - | - | - | - | 75 |
| Isopropanol cosolvent | 10 | 10 | 10 | 10 | 10 |
| Synthetic silica anti-sticking agent | 10 | 10 | 10 | 10 | 10 |
| Isocyanate crosslinking agent | 5 | 5 | 5 | 5 | 5 |

The aqueous polyarylsulfone-modified polyurethane, aqueous acrylic acid-modified polyurethane, unmodified aqueous polyurethane, and unmodified aqueous polyethersulfone were purchased from Stahl Fine Chemistry (Suzhou) Co., Ltd. and Covestro Polymer (China) Co., Ltd., respectively.

The leather materials obtained from examples 1-4 and comparative examples 1-10 were subjected to an environment cycle test, environment aging test, low-temperature aging test, anti-sticking test, and adhesion strength test. Respective test standards and test requirements of these tests were shown in Table 3. Results of each test were shown in Table 4.

**Table 3 Test standards and test requirements**

| Test item | Test method | Requirement |
|---|---|---|
| Environment cycle test | TL 496 3.4.1 | Pass |
| Environment aging test | TL 496 3.4.2 | Pass |
| Low-temperature aging test | TL 496 3.4.4 | Pass |
| Anti-sticking test | GMW14132 (5 kg, 24 H) | < 100 N |
| Adhesion strength test | ISO 4578 | > 60 N |

**Table 4 Test results**

| | Environm ent cycle | Environm ent aging | Low-temperat ure aging | Anti-sticki ng | Adhesi on strengt h |
|---|---|---|---|---|---|
| Example 1 | Pass | Pass | Pass | 55 | 70 |
| Example 2 | Pass | Pass | Pass | 95 | 80 |
| Example 3 | Pass | Pass | Pass | 40 | 65 |
| Example 4 | Pass | Pass | Pass | 20 | 62 |
| Comparati ve example 1 | Pass | Pass | Pass | 120 | 70 |
| Comparati ve example 2 | Pass | Pass | Pass | 20 | 58 |
| Comparati ve example 3 | Pass | Pass | Pass | 55 | 45 |
| Comparati ve example 4 | Pass | Pass | Not pass | 54 | 68 |
| Comparati ve example 5 | Pass | Pass | Pass | 52 | 48 |
| Comparati ve example 6 | Pass | Pass | Not pass | 53 | 65 |
| Comparati ve example 7 | Pass | Pass | Not pass | 70 | 50 |
| Comparati ve example 8 | Pass | Pass | Pass | 60 | 50 |
| Comparati ve example 9 | Not pass | Pass | Pass | 55 | 57 |
| Comparati ve example 10 | Not pass | Pass | Not pass | 40 | 75 |

The test results according to table 4 show that the test results of the leather materials obtained from examples 1 to 4 according to the present invention all meet the use standards for car interiors. In comparative example 1, since the content of the anti-sticking agent is too low, the anti-sticking property of the leather material is deteriorated; in comparative example 2, since the content of the anti-sticking agent is too high, the adhesion strength between the aqueous coating and the leather layer is deteriorated; in comparative example 3, since the content of the crosslinking agent is too low, the adhesion strength between the aqueous coating and the leather layer is deteriorated; in comparative example 4, since the content of the crosslinking agent is too high, the aging resistance of the leather material is deteriorated; and in comparative example 5, since the content of the cosolvent is too high, the adhesion strength between the aqueous coating and the leather layer is deteriorated. In addition, in the case of using the aqueous polyarylsulfone-modified polyurethane in comparative example 6, the aging resistance of the leather material does not meet the requirements; in the case of using the aqueous acrylic acid-modified polyurethane in comparative example 7, both the aging resistance and the coating adhesion strength of the leather material do not meet the requirements; in the case of using the unmodified aqueous polyurethane in comparative example 8, the coating adhesion strength does not meet the requirements; in the case of using the physically mixed aqueous polyurethane and polyethersulfone (not chemically modified) in comparative example 9, both the aging resistance and the coating adhesion strength of the leather material do not meet the requirements; and in the case of using the unmodified aqueous polyethersulfone in comparative example 10, the aging resistance of the leather material does not meet the requirements.

In addition, the experimental tests show that the leather materials obtained in examples 1 to 4 according to the present invention also have good stretchability, and the problems of breakage and poor bonding do not occur in a molding processing process.

It can be understood that the above embodiments are merely exemplary embodiments used to illustrate the principle of the present invention, and the present invention is not limited thereto. Various variants and improvements can be made by those of ordinary skill in the art without departing from the spirit and essence of the present invention, and these variants and improvements are also considered to be within the scope of protection of the present invention.

## Claims

1. An aqueous paint for a leather coating, wherein the aqueous paint comprises an aqueous polyethersulfone-modified polyurethane, wherein the aqueous polyethersulfone-modified polyurethane is an aqueous polyurethane dispersion chemically modified by a polyethersulfone.

2. The aqueous paint for a leather coating as claimed in claim 1, wherein the aqueous paint contains 50-97% of the aqueous polyethersulfone-modified polyurethane based on the total weight of the aqueous paint.

3. The aqueous paint for a leather coating as claimed in claim 1, wherein the aqueous paint contains 1-10% of a crosslinking agent based on the total weight of the aqueous paint.

4. The aqueous paint for a leather coating as claimed in claim 1, wherein the aqueous paint contains 2-20% of an anti-sticking agent based on the total weight of the aqueous paint.

5. The aqueous paint for a leather coating as claimed in any one of claims 1-4, wherein the aqueous paint contains 0-20% of a cosolvent based on the total weight of the aqueous paint.

6. A leather material comprising a leather layer and an aqueous coating coated on a surface of the leather layer, wherein the aqueous coating is prepared from the aqueous paint as claimed in any one of claims 1-5.

7. The leather material as claimed in claim 6, wherein the leather layer comprises a polyolefin skin layer and the aqueous coating is coated on a surface of the polyolefin skin layer.

8. The leather material as claimed in claim 7, wherein the polyolefin skin layer is a polyolefin dense layer or a polyolefin foamed layer.

9. The leather material as claimed in claim 7, wherein the polyolefin skin layer comprises a polyolefin dense layer and a polyolefin foamed layer, and the aqueous coating is coated on a surface of the polyolefin foamed layer.

10. The leather material as claimed in claim 7, wherein the leather layer comprises a PVC skin layer and the aqueous coating is coated on a surface of the PVC skin layer.
